# FASCICULE DE BREVET EUROPEEN

(11) **EP 3 191 291 B1**
(45) Date de publication et mention de la délivrance du brevet: **27.10.2021**
(21) Numéro de dépôt: 15759479.7
(22) Date de dépôt: 09.09.2015
(51) Int. Cl.: B29C 70/86, B29C 65/00, F16C 3/02, F16C 7/02, B29C 53/56

(54) **ARBRE DE TRANSMISSION**
ANTRIEBSWELLE
TRANSMISSION SHAFT

(30) Priorité: 09.09.2014 BE 201400676
(43) Date de publication de la demande: 19.07.2017
(73) Titulaire: BD Invent SA, 4682 Heure-Le-Romain (BE)
(72) Inventeur: BOVEROUX, Benoît, B-4000 Rocourt (BE)
(74) Mandataire: AWA Benelux
(86) Numéro de dépôt international: PCT/EP2015/070569
(87) Numéro de publication internationale: WO 2016/038072

(56) Documents cités:
- DE-A1- 3 408 650
- DE-A1- 4 111 286
- DE-A1-102011 085 962
- FR-A1- 2 564 911
- None

## Description

### Objet de l'invention

La présente invention concerne un arbre de transmission.

La présente invention concerne également la pièce d'accouplement destinée à être positionnée à une extrémité du corps de l'arbre de transmission.

### Etat de la technique

Un arbre de transmission est constitué d'un corps et de pièces d'accouplement disposées aux extrémités du corps et servant de liaison avec, par exemple, une boite de vitesse ou un cardan. On peut citer comme exemple d'application dans le domaine aéronautique, les arbres de transmission utilisés pour actionner les volets des ailes d'avion. On peut encore citer comme exemple d'application dans le secteur automobile, l'arbre de transmission entre la boîte de vitesse et le pont arrière du véhicule.

Il est connu de réaliser le corps de l'arbre en matériau composite et de rapporter sur le corps des pièces d'accouplement en matériau métallique. Ainsi, les documents US 7,874,925 et US 2006/0258469 décrivent un procédé de fabrication d'un arbre avec un tube en composite et des accouplements métalliques pressés axialement aux extrémités du tube polymérisé. Les accouplements sont munis de dents configurées pour creuser des sillons sur la surface extérieure du tube et ainsi former une liaison mécanique entre le tube et les accouplements. La formation de ces sillons génère des débris qui, dans le cas du document US 7,874,925, sont collectés dans des dépressions usinées à côté des dents dans les pièces d'accouplement.

Le principal désavantage du procédé décrit dans ces documents est qu'il nécessite de dégrader le tube pour assurer la fixation de la pièce d'accouplement sur le corps de l'arbre. Cela peut initier des fissures qui, en utilisation, vont se propager. De plus, le contact entre la pièce d'accouplement et le tube ne peut s'établir parfaitement de par la présence des débris et des dépressions destinées à collecter les débris. L'ensemble tube-pièce d'accouplements forme ainsi une structure avec des interstices et porosités néfastes à une bonne tenue mécanique dans le temps de la pièce, cette dernière étant plus sensible aux conditions environnementales (humidité, variation de température, agents externes dégradants tels que les huiles et liquides de dégivrage) et moins résistante en fatigue lors d'une inversion du sens de rotation. En outre, le tube et les accouplements forment un ensemble mécanique avec des zones de reprises d'efforts différents, liées au fait que les propriétés mécaniques du tube déformé et des débris ne sont pas identiques.

On connaît du document DE 10 2011 053480 un procédé de fabrication d'une bielle où un corps creux non cuit, c.à.d. encore déformable, est rétracté radialement puis glissé à l'intérieur d'un embout. Ensuite, un élément gonflable est placé à l'intérieur de tout le corps afin que sa surface extérieure se conforme à ses extrémités à celle de la surface intérieure de l'embout. En d'autres mots, un corps mou du type chaussette est gonflé par application d'une pression à l'intérieur du corps. La difficulté de ce procédé est de contrôler avec précision le degré d'expansion et, par là-même, le diamètre intérieur du corps. Sans un contrôle précis, le diamètre intérieur est susceptible de varier le long de l'axe du corps et d'un essai à l'autre. Or, dans le domaine aéronautique comme dans d'autres domaines d'ailleurs, la tolérance est faible. Il est très important de pouvoir garantir les dimensions au dixième de millimètre près. En outre, l'expansion s'effectuant sur la totalité de l'arbre, il est nécessaire d'effectuer cette expansion dans un moule ce qui augmente les coûts d'outillage.

Le document FR 2 564 911 propose également un procédé utilisant un élément gonflable. Un tube est emmanché avant polymérisation dans l'évidement d'un about métallique. Ensuite, pendant la polymérisation, la paroi du tube est appliquée contre la face interne de l'évidement à l'aide d'une vessie introduite dans le tube et gonflée.

Du document DE 34 08 650, on connaît un procédé de réalisation d'un arbre par enroulement filamentaire et placement d'un tube en tissu sur un noyau en mousse. Le noyau est maintenu dans l'arbre après fabrication. Cela signifie qu'on perd l'outillage à chaque réalisation et qu'on perd en légèreté, ce qui pour l'aéronautique n'est pas acceptable. Ce procédé présente également le désavantage de nécessiter des renforts et colles incompatibles avec l'obtention d'une structure homogène à travers tout le corps, une structure homogène étant recommandée pour éviter les problèmes de dilatation différentielle au sein du corps de l'arbre.

Du document DE 41 11 286, on connaît un procédé d'assemblage entre un tube et une pièce d'accouplement comportant sur sa surface intérieure des cannelures. Le tube est positionné à l'intérieur de la pièce d'accouplement en butée contre un raccord également positionné à l'intérieur de la pièce d'accouplement. L'adhésion entre la pièce d'accouplement d'une part et le raccord et le tube d'autre part peut être améliorée en utilisant un adhésif. L'orientation des fibres dans le tube est telle que lorsque la pièce d'accouplement est pressée, les fibres aux extrémités du tube ne sont pas endommagées.

Du document DE 10 2011 085 962, on connaît un procédé de fabrication d'un axe profilé. L'axe présente des rainures sur sa surface intérieure qui coopère avec un embout qui vient donc se positionner à l'intérieur de l'axe.

### Buts de l'invention

La présente invention vise à réaliser un arbre de transmissior selon la revendication 1 dépourvu d'interstice et de porosité entre l'accouplement et le corps de l'arbre de transmission et présentant une structure homogène au travers du corps. La présente invention vise en outre une pièce d'accouplement pour un arbre de transmission selon la revendication 4.

### Principaux éléments caractéristiques de l'invention

Il est divulgué un procédé de fabrication d'un arbre de transmission comportant un corps en composite et une pièce d'accouplement à une extrémité du corps, ladite pièce d'accouplement étant creuse et comportant sur sa surface intérieure des cannelures, le fond des cannelures délimitant le pourtour d'un cercle de diamètre D2 et la tête des cannelures délimitant le pourtour d'un cercle de diamètre D1, ledit procédé comprenant successivement les étapes de:
- mise à disposition d'un mandrin comportant une partie expansible et une partie non expansible ;
- réalisation du corps par enroulement filamentaire de fibres pré-imprégnées autour du mandrin ;
- positionnement de la pièce d'accouplement autour du corps au niveau de la partie expansible du mandrin ;
- expansion de la partie expansible du mandrin afin de remplir le fond des cannelures avec les fibres pré-imprégnées du corps ;
- cuisson du corps muni de la pièce d'accouplement.

Le procédé peut comporter au moins une ou une combinaison appropriée des caractéristiques suivantes :
- la pièce d'accouplement est positionnée autour du corps n'ayant pas subi de cuisson préalable ;
- le corps réalisé par enroulement filamentaire a un diamètre extérieur légèrement inférieur au diamètre D1 ;
- les cannelures s'étendent sur toute la longueur de la pièce d'accouplement ;
- la pièce d'accouplement comporte sur sa surface intérieure une rainure s'étendant dans une direction perpendiculaire aux cannelures, l'expansion de la partie expansible du mandrin permettant également de remplir la rainure avec les fibres pré-imprégnées du corps ;
- l'arbre de transmission comporte une pièce d'accouplement à chacune de ses extrémités, et le mandrin comporte la partie non expansible encadrée à chaque extrémité de la partie expansible.

La présente invention se rapporte également à un arbre de transmission selon la revendication 1.

Selon des modes particuliers de l'invention, l'arbre de transmission comporte au moins une ou une combinaison appropriée des caractéristiques suivantes :
- les cannelures s'étendent sur toute la longueur de la pièce d'accouplement ;
- il comporte une pièce d'accouplement à chaque extrémité du corps.

La présente invention se rapporte aussi à une pièce d'accouplement creuse pour un arbre de transmission selon la revendication 4.

Selon des modes particuliers de l'invention, la pièce d'accouplement comporte au moins une ou une combinaison appropriée des caractéristiques suivantes :
- les têtes des cannelures ont un angle d'ouverture inférieur ou égal à 55 degrés;
- le fond des cannelures est plat ;
- les têtes des cannelures sont tronquées.

### Brève description des figures

La figure 1 représente une vue de profil de l'arbre de transmission selon l'invention.
La figure 2 représente respectivement une vue de profil et une vue en coupe selon l'axe A-A de l'accouplement selon l'invention.
La figure 3 représente respectivement une vue latérale de l'accouplement selon l'invention, un agrandissement de la zone B avec les rayons en tête (R1) et fond (R2) de cannelures indiqués et une vue en coupe avec la géométrie des cannelures.
La figure 4 représente une vue en coupe axiale des trois mandrins assemblés selon l'invention. Le mandrin du milieu n'est pas expansible et les mandrins disposés de part et d'autre sont expansibles.
La figure 5 représente une vue en coupe axiale du tube selon l'invention obtenu par enroulement filamentaire autour des trois mandrins.
La figure 6 représente, selon l'invention, une vue en coupe axiale des pièces d'accouplement glissées sur le tube.
La figure 7 représente une vue agrandie d'une des pièces d'accouplement selon la figure 6 rapportée autour du tube.
La figure 8 illustre, à l'aide d'une vue partielle, le positionnement du tube au sein de la pièce d'accouplement avant l'expansion du mandrin expansible.
La figure 9 illustre, à l'aide de deux vues partielles, le positionnement du tube au sein de la pièce d'accouplement avant et après l'expansion du mandrin expansible.
La figure 10 représente l'assemblage selon la figure 6 après retrait des mandrins.

**Légende**
(1) Arbre de transmission
(2) Tube, aussi appelé corps de l'arbre de transmission
(3) Pièce d'accouplement, aussi appelée accouplement
(4) Cannelure, aussi appelée rainure longitudinale, sur la paroi intérieure, aussi appelée surface intérieure, de la pièce d'accouplement
(5) Dent, aussi appelée tête de cannelure
(6) Fond de cannelure, aussi appelé creux
(7) Rainure transversale
(8) Bride
(9) Orifice de fixation
(10) Mandrin
(11) Partie non expansible du mandrin
(12) Partie expansible du mandrin

### Description détaillée de l'invention

Il est divulgué un procédé de fabrication d'un arbre de transmission et l'invention se rapporte à un arbre de transmission. Elle se rapporte également à la pièce d'accouplement positionnée à une extrémité de l'arbre, cette pièce ayant une forme particulière qui permet d'assurer, en utilisation, une reprise d'effort optimale et qui permet d'assurer un contact parfait entre la pièce d'accouplement et le corps de l'arbre.

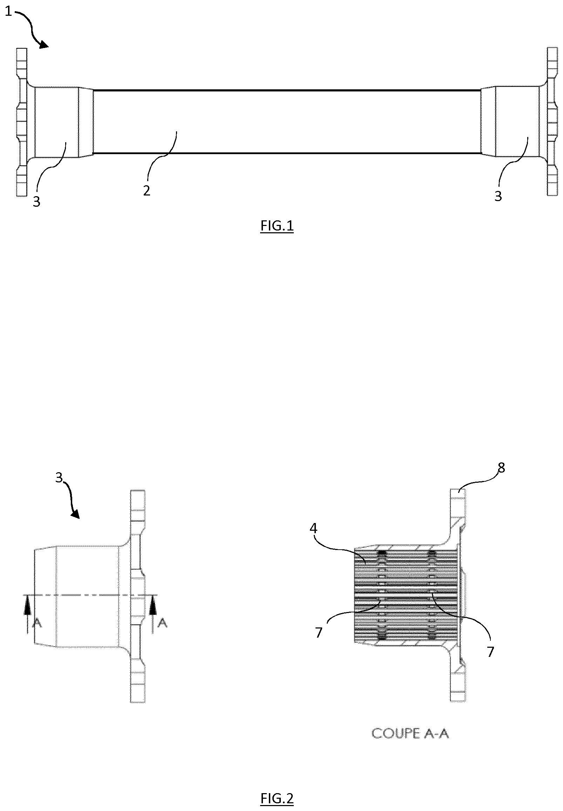

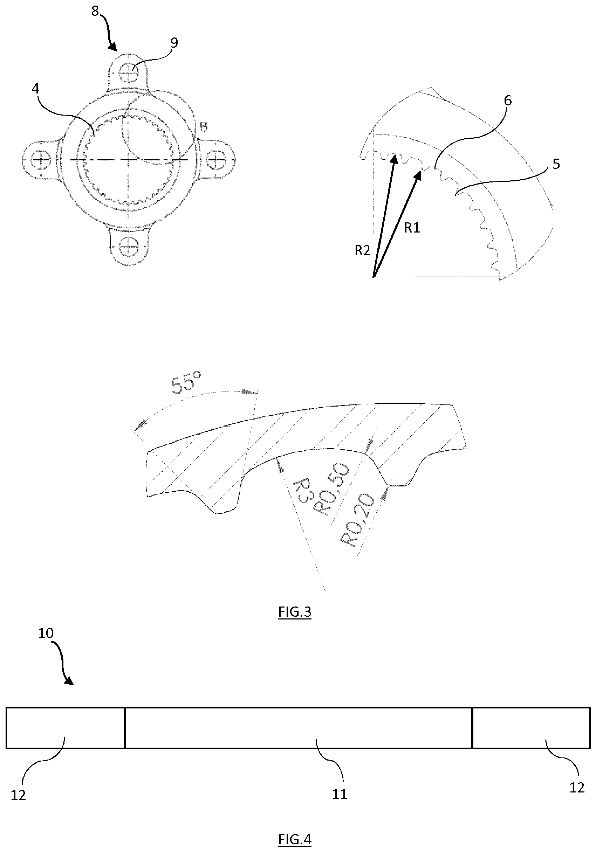

L'arbre de transmission 1 tel que représenté à la figure 1 comporte un tube 2 en matériau composite et une pièce d'accouplement 3 positionnée à chaque extrémité du tube 2. La pièce d'accouplement 3 présentée aux figures 2 et 3 est creuse et destinée à être montée autour du tube 2. Elle comporte sur sa paroi intérieure de forme cylindrique une série de rainures longitudinales 4, aussi appelées cannelures, s'étendant parallèlement à la direction axiale de la pièce sur toute la longueur de la paroi intérieure. Plus précisément, la paroi intérieure cannelée comporte une succession de dents 5 séparées par un fond plat 6. Les dents présentent en tête une ouverture de maximum 55° comme montré à la figure 3. Les dents sont préférentiellement émoussées pour éviter d'endommager la fibre du tube composite lors de la fabrication de l'arbre. Ainsi, le sommet de la dent peut se présenter sous forme de pointe tronquée. Le sommet de la dent 5, aussi appelée tête de cannelure, délimite le pourtour d'un cercle de diamètre D1 (noté R1 pour Rayon 1) et le fond lisse 6, aussi appelé fond de cannelure, délimite un cercle de diamètre D2 (noté R2 pour Rayon 2) comme illustré sur la figure 3.

En outre, la paroi intérieure de l'accouplement comporte une ou plusieurs rainures transversales 7 s'étendant sur tout le périmètre du cylindre dans une direction perpendiculaire aux rainures longitudinales 4 et interrompant ces dernières.

La paroi extérieure de l'accouplement est munie à une extrémité de brides 8 avec des orifices 9 pour le boulonnage, suivie d'une partie cylindrique d'épaisseur de paroi d'abord constante avant de s'affiner en direction de l'autre extrémité de la pièce d'accouplement (voir figures 2 et 3).

L'arbre de transmission est réalisé comme suit.

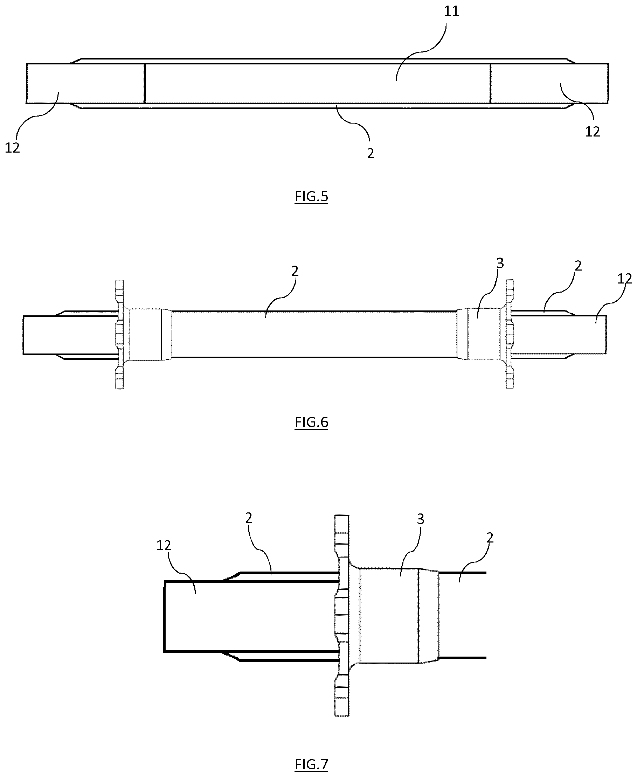

Dans une première étape, le tube 2, aussi appelé corps de l'arbre, est réalisé par enroulement filamentaire d'une ou plusieurs couches de fibres pré-imprégnées sur un mandrin métallique 10 d'un seul tenant muni de trois parties et montré à la figure 4. Ce mandrin est rigide avec un module de Young supérieur à 60 GPa pour contrôler précisément l'expansion du mandrin à la troisième étape et ainsi obtenir un corps avec un diamètre intérieur parfaitement constant le long de son axe. Une première partie 11 du mandrin est lisse et non expansible et encadrée à chaque extrémité par une partie lisse expansible 12. Les trois parties sont d'un même diamètre correspondant au diamètre intérieur du tube à réaliser. Après enroulement filamentaire des couches de fibres, le tube 2 tel que représenté à la figure 5 est obtenu. Le tube a un diamètre extérieur légèrement inférieur à celui du diamètre D1 en tête de cannelures de manière à pouvoir dans la seconde étape glisser les accouplements sur le tube sans l'endommager. A ce stade, le tube n'a pas subi de cycle de cuisson.

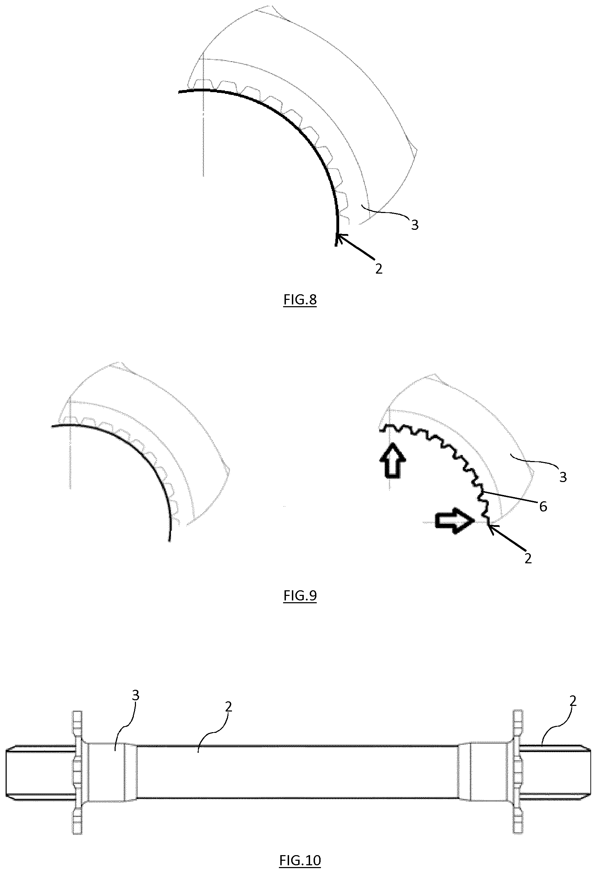

La deuxième étape consiste à placer les accouplements 3 autour du tube 2 au niveau des parties expansibles 12 du mandrin (voir figures 6 et 7). L'ensemble de la pièce d'accouplement 3 est positionné autour du tube 2 aux extrémités ou à proximité des extrémités, un excédent de matière composite 2 pouvant en effet être maintenu derrière la pièce d'accouplement 3 comme montré aux figures 6 et 7. Lors de cette étape, le tube 2 en composite est positionné à l'intérieur de l'accouplement 3 comme schématisé à la figure 8. Le tube 2 touche la tête des cannelures mais ne rentre pas en contact avec les fonds et les flancs des cannelures.

La troisième étape consiste en l'ouverture et l'expansion de la partie expansible 12 des mandrins. L'ouverture des mandrins va forcer la fibre à se loger dans les rainures longitudinales 4 jusqu'au fond 6 de la cannelure (voir figure 9). De même, la fibre va se loger dans les rainures transversales si la pièce d'accouplement en comporte, ce qui va permettre de bloquer axialement l'accouplement.

Dans une quatrième étape, le tube 2 est cuit afin de polymériser la fibre pré-imprégnée de résine et finaliser le sertissage des accouplements.

La cinquième étape consiste à enlever le mandrin (voir figure 10).

Finalement, la sixième étape consiste à couper l'excédent du tube 2 composite disposée derrière les brides de la pièce d'accouplement s'il y a excédent afin d'obtenir l'arbre fini de la figure 1.

L'arbre d'entrainement ainsi obtenu comporte un matériau composite qui remplit toute la cannelure de l'accouplement.

Le corps de l'arbre de transmission peut être réalisé avec des fibres de carbone et l'accouplement est métallique, synthétique ou composite.

Finalement, on précisera que le procédé a été décrit pour un arbre muni à chaque extrémité d'une pièce d'accouplement. Il est également divulgué un procédé de fabrication d'un arbre muni seulement à une extrémité d'une pièce accouplement, l'autre extrémité pouvant être, par exemple, un embout de type fourche.

### Avantages du procédé, de l'arbre de transmission et de la pièce d'accouplement selon l'invention

L'arbre présente des caractéristiques qui sont propres à l'enroulement filamentaire avec un niveau de tension sur la fibre qui lui confère des propriétés mécaniques optimales tout en réalisant un sertissage par expansion pour obtenir un contact parfait entre la pièce d'accouplement et le corps. Grâce à ce contact parfait entre le tube et les accouplements, aucun adhésif n'est requis pour améliorer l'adhésion. De même, contrairement aux arbres de l'art antérieur, aucun renforcement n'est requis à l'intérieur du tube car, grâce à l'étape d'expansion, il n'est pas nécessaire de soutenir les parois du tube pour empêcher leur effondrement lors du placement de la pièce d'accouplement.

L'expansion mécanique via un mandrin rigide permet de contrôler précisément l'expansion sur base du déplacement radial du mandrin contrairement à une expansion par soufflage d'un gaz où le contrôle s'effectue sur base d'une mesure de pression. Ainsi, le procédé selon l'invention permet de réaliser des arbres avec des dimensions d'une précision de l'ordre de 0.1mm.

En outre, une pression supérieure peut être appliquée via le déplacement radial du mandrin. Cela a pour conséquence qu'un contact sans porosité s'établit entre les cannelures et le corps et, ce, même si les dents sont abruptes avec un angle d'ouverture en tête inférieur ou égal à 55 degrés. Cela n'est pas le cas pour l'expansion sous gaz où le profil des dents doit être plus doux pour ne pas laisser d'interstices à la base des dents.

De plus, l'expansion étant réalisée uniquement à des endroits spécifiques, le procédé permet de s'affranchir de la fabrication en moule et d'utiliser seulement une barre comme outillage, ce qui a pour effet de diminuer fortement les coûts des outillages nécessaires à la mise en œuvre du procédé.

Le procédé présente pour avantage que les fibres sont conformées à la troisième étape lorsque la résine n'est pas encore polymérisée. Elle est donc encore malléable. Cette conformation permet d'établir le contact parfait entre le tube composite et l'accouplement. Les fibres pré-imprégnées remplissent les rainures sans être endommagées. Tout risque de génération et de propagation de fissures est dès lors supprimé et l'arbre forme un ensemble homogène sans porosité.

Aucun débris n'est généré durant la fabrication de l'arbre. L'accouplement peut donc être uniquement constitué sur sa surface intérieure d'une cannelure avec un fond et une tête sans zone arrière destinée à recueillir les débris.

Les rainures longitudinales permettent de transmettre parfaitement et sans jeu l'effort de torsion entre l'accouplement et le tube composite. Les rainures s'étendent sur toute la longueur de la pièce d'accouplement, ce qui permet de maintenir un contact parfait entre le tube et la pièce d'accouplement sur toute la longueur de cette dernière, ce qui n'est pas le cas dans les documents US 7,874,925 et US 2006/0258469. Dans ces derniers, il est nécessaire de garder une zone sans rainure, qu'on pourrait qualifier de zone d'engagement, afin de placer librement la pièce d'accouplement autour du tube, c.à.d. de manière concentrique, avant déformation du tube dans la zone rainurée. En l'absence de cette zone, un outillage de positionnement serait requis pour s'assurer que la pièce d'accouplement est bien positionnée avant de creuser les sillons dans le tube.

Les rainures transversales permettent une localisation et une reprise d'effort axial entre le tube composite et l'accouplement, le nombre de rainures transversales étant fonction de la charge longitudinale à reprendre par l'accouplement.

De plus, contrairement au document US 7,874,925, le procédé de fixation des pièces d'accouplement au tube composite et la géométrie des cannelures des pièces d'accouplement ne génèrent pas de contraintes résiduelles après assemblage. Ce principe de liaison pièce d'accouplement et tube composite permet de ne pas devoir placer une rondelle à l'intérieur du tube composite pour éviter l'effondrement de la paroi en composite lors de la transmission d'un couple. Ce point a pour effet de diminuer le poids de l'ensemble et de diminuer les coûts de fabrication.

La fibre est continue jusqu'à l'extrémité du tube contrairement aux arbres de transmission des documents US 7,874,925 et US 2006/0258469 où les fibres sont sectionnées aux extrémités du tube sur sa surface longitudinale, ce qui fragilise le matériau.

## Revendications

1. Arbre de transmission (1) comprenant un corps (2) en composite et une pièce d'accouplement (3) creuse positionnée autour du corps (2) à une de ses extrémités, ladite pièce d'accouplement (3) comportant sur sa surface intérieure des cannelures (4) s'étendant parallèlement à l'axe longitudinal du corps (2) afin d'optimiser la reprise d'efforts en torsion, **caractérisé en ce que** ladite pièce d'accouplement (3) comporte sur sa surface intérieure une rainure transversale (7) s'étendant dans une direction perpendiculaire aux cannelures (4), ledit corps (2) composite remplissant l'entièreté des cannelures (4) et la rainure transversale (7) de manière à avoir un contact en tout point entre le corps (2) et la pièce d'accouplement (3) ne laissant pas subsister d'interstices.

2. Arbre de transmission (1) selon la revendication 1, dans lequel les cannelures (4) s'étendent sur toute la longueur de la pièce d'accouplement (3).

3. Arbre de transmission (1) selon la revendication 1 ou 2, comportant une pièce d'accouplement (3) à chaque extrémité du corps (2).

4. Pièce d'accouplement (3) creuse pour un arbre de transmission comportant sur sa surface intérieure des cannelures (4) s'étendant sur toute la longueur de la pièce d'accouplement (3) et parallèlement à l'axe longitudinal de ladite pièce (3), ladite pièce (3) étant **caractérisée en ce qu'**elle comporte sur sa surface intérieure une ou plusieurs rainures (7) s'étendant dans une direction perpendiculaire aux cannelures (4).

5. Pièce d'accouplement (3) selon la revendication 4, dans laquelle le fond (6) des cannelures (4) est plat.

6. Pièce d'accouplement (3) selon la revendication 4 ou 5, dans laquelle les têtes (5) des cannelures (4) ont un angle d'ouverture inférieur ou égal à 55 degrés.

7. Pièce d'accouplement (3) selon l'une quelconque des revendications 4 à 6, dans laquelle les têtes (5) des cannelures (4) sont tronquées.

## Patentansprüche

1. Antriebswelle (1), umfassend einen Körper (2) aus Verbundstoff und ein hohles Kupplungsstück (3), das um den Körper (2) an einem seiner Enden positioniert ist, wobei das besagte Kupplungsstück (3) auf seiner inneren Fläche Rillen (4) umfasst, die sich parallel zur Längsachse des Körpers (2) erstrecken, um die Aufnahme der Torsionskräfte zu optimieren, **dadurch gekennzeichnet, dass** das Kupplungsstück (3) auf seiner inneren Fläche eine Quernut (7) umfasst, die sich in einer Richtung quer zu den Rillen (4) erstreckt, wobei der besagte Verbundstoffkörper (2) die Gesamtheit der Rillen (4) und der Quernut (7) ausfüllt, um einen Kontakt an jedem Punkt zwischen dem Körper (2) und dem Kupplungsstück (3) aufzuweisen, der keine Zwischenräume freilässt.

2. Antriebswelle (1) nach Anspruch 1, wobei sich die Rillen (4) auf der ganzen Länge des Kupplungsstücks (3) erstrecken.

3. Antriebswelle (1) nach Anspruch 1 oder 2, umfassend ein Kupplungsstück (3) an jedem Ende des Körpers (2).

4. Hohles Kupplungsstück (3) für eine Antriebswelle, umfassend auf seiner inneren Fläche Rillen (4), die sich auf der ganzen Länge des Kupplungsstücks (3) und parallel zur Längsachse des besagten Stücks (3) erstrecken, wobei das besagte Stück (3) **dadurch gekennzeichnet ist, dass** es auf seiner inneren Fläche eine oder mehrere Nuten (7) umfasst, die sich in einer Richtung senkrecht zu den Rillen (4) erstrecken.

5. Kupplungsstück (3) nach Anspruch 4, wobei der Boden (6) der Rillen (4) flach ist.

6. Kupplungsstück (3) nach Anspruch 4 oder 5, wobei die Köpfe (5) der Rillen (4) einen Öffnungswinkel von weniger als oder gleich 55 Grad aufweisen.

7. Kupplungsstück (3) nach irgendeinem der Ansprüche 4 bis 6, wobei die Köpfe (5) der Rillen (4) verkürzt sind.

## Claims

1. Transmission shaft (1) comprising a composite body (2) and a hollow coupling piece (3) positioned around the body (2) at one end thereof, said coupling piece (3) including, on its inner surface, splines (4) extending parallel to the longitudinal axis of the body (2) so as to optimize the torsional loadbearing, **characterized in that** said coupling piece (3) includes, on its inner surface, a transverse groove (7) extending in a direction perpendicular to the splines (4), said composite body (2) filling the entirety of the splines (4) and the transverse groove (7) so as to have contact at all points between the body (2) and the coupling part (3) not allowing any gaps to remain.

2. Transmission shaft (1) according to claim 1, wherein the splines (4) extend over the entire length of the coupling piece (3) .

3. Transmission shaft (1) according to claim 1 or 2, including a coupling piece (3) at each end of the body (2).

4. Hollow coupling piece (3) for a transmission shaft including, on its inner surface, splines (4) extending over the entire length of the coupling piece (3) and parallel to the longitudinal axis of said piece (3), said piece (3) being **characterized in that** it includes, on its inner surface, one or several grooves (7) extending in a direction perpendicular to the splines (4).

5. Coupling piece (3) according to claim 4, wherein the bottom (6) of the splines (4) is flat.

6. Coupling piece (3) according to claim 4 or 5, wherein the splines' (4) heads (5) have an opening angle of less than or equal to 55 degrees.

7. Coupling piece (3) according to any one of claims 4 to 6, wherein the heads (5) of the splines (4) are truncated.
